# EUROPÄISCHE PATENTSCHRIFT

(11) **EP 3 423 348 B1**
(45) Veröffentlichungstag und Bekanntmachung des Hinweises auf die Patenterteilung: **15.09.2021**
(21) Anmeldenummer: 17708706.1
(22) Anmeldetag: 20.02.2017
(51) Int. Cl.: B63G 8/36, B63B 43/00, B63J 2/06, B63H 21/17

(54) **WASSERFAHRZEUG UND VERFAHREN ZUM BETRIEB EINES WASSERFAHRZEUGES**
WATERCRAFT AND METHOD FOR OPERATING A WATERCRAFT
NAVIRE ET PROCÉDÉ POUR FAIRE FONCTIONNER UN NAVIRE

(30) Priorität: 29.04.2016 DE 102016207419
(43) Veröffentlichungstag der Anmeldung: 09.01.2019
(73) Patentinhaber: Siemens Energy Global GmbH & Co. KG, 81739 München (DE)
(72) Erfinder: KRIEWS, Thorben, 22523 Hamburg (DE); TIGGES, Kay, 24257 Hohenfelde (DE)
(86) Internationale Anmeldenummer: PCT/EP2017/053792
(87) Internationale Veröffentlichungsnummer: WO 2017/186374

(56) Entgegenhaltungen:
- EP-A2- 1 717 141
- WO-A1-2009/026964
- WO-A2-2015/163769
- DE-A1- 4 029 443
- GB-A- 685 675
- GB-A- 1 027 678
- KR-A- 20140 139 145
- KR-U- 20150 001 748
- US-A1- 2007 242 134
- US-A1- 2013 002 065

## Beschreibung

Die Erfindung betrifft ein Wasserfahrzeug bzw. ein Verfahren zum Betrieb eines Wasserfahrzeuges. Wasserfahrzeuge sind beispielsweise Schiffe bzw. Unterseeboote (U-Boote). Beispiele für Schiffe sind Frachter, Tanker, Containerschiffe, Passagierschiffe, Schnellboote, Patrouillenboote, Minenräumboote, usw. Beispiele für Unterseeboote sind Atomunterseeboote, Forschungsunterseebote, Jagdunterseeboote, Rettungsunterseeboote, Reparaturunterseeboote, unbemannte Unterwasserfahrzeuge (auch UUV (Unmanned Underwater Vehicle) genannt), wobei diese z.B. diese ferngesteuerte Tauchfahrzeuge oder auch autonome Tauchfahrzeuge sein können, etc.

Aus der EP 1 354 387 B1 ist z.B. ein Energiesystem für ein Wasserfahrzeug, insbesondere für Schiffe, U-Boote und dergleichen bekannt. Diese Wasserfahrzeuge unterschiedlicher Art und Größe werden üblicherweise mit Festpropellern, Verstellpropellern, Ruderpropellern und mitunter auch von Wasserstrahlsystemen angetrieben. Dabei wird die mechanische Energie für den Antrieb direkt von Verbrennungsmotoren, beispielsweise Otto Motoren, Dieselmotoren mit Schwer- bzw. Leichtölbetrieb oder Gasturbinen, erzeugt. Als Energieträger werden z.B. fossile Brennstoffe eingesetzt, die in seitens des Wasserfahrzeugs mitgeführten Tanks gelagert werden. Die Verbrennungsmotoren an Bord von Wasserfahrzeugen werden dabei nicht nur für den Antrieb, sondern auch zur Erzeugung elektrischer Energie für eine Vielzahl von elektrischen Verbrauchern an Bord von Wasserfahrzeugen eingesetzt, beispielsweise für Hilfsantriebe, die wiederum elektrische Energie in mechanische Energie umsetzen, elektrische Geräte zur Erzeugung von Wärme, Kälte und Licht, elektrische Geräte der Medientechnik und elektrische Geräte der Nautik. Dabei werden die Verbrennungsmotoren mit elektrischen Maschinen gekoppelt, die die von den Verbrennungsmotoren abgegebene mechanische Energie in elektrische Energie für die elektrischen Verbraucher umwandeln. Das Energiesystem für das Wasserfahrzeug kann auch eine Batterie und/oder eine Brennstoffzelle aufweisen, mittels welchem über ein Leitungsnetzwerk wenigstens ein elektrischer Antrieb und wenigstens ein elektrischer Verbraucher mit elektrischer Energie versorgbar sind, wobei der elektrische Antrieb beispielsweise ein Wechselstromantrieb ist, welcher über wenigstens eine Wechselrichtereinheit an ein Gleichstromnetzwerk des Leitungsnetzwerks anschließbar ist.

Aus der KR 2015 0001748 U ist eine Schiffsstruktur mit einer gasisolierten Schaltanlage bekannt. Als Gas wird SF6 verwendet.

Aus der WO 2009/026964 A1 ist eine Schiffskonstruktion bekannt, deren Steifigkeit durch beweglichen Ballast verändert werden kann. Neben der Steifigkeit kann so auch der Trimmwinkel korrigiert werden. Der Vorgang des Bewegens des Ballastes wird manuell oder automatisch mit computergestützten Mitteln wie einer SPS durchgeführt. In einigen Versionen erfüllt dieses System die Anforderungen des Explosionsschutzes.

Aus der WO 2015/163769 A2 ist eine Anlage zur Verarbeitung von Kohlenwasserstoffen bekannt. Diese umfasst eine Vielzahl von Modulen, die für die Verarbeitung der Kohlenwasserstoffe und der zugehörigen Bestandteile und für die Steuerung solcher Prozesse konfiguriert sind, wobei die Module von einem abgedichteten Gehäuse umschlossen sind, wodurch die Module gegenüber der die Anlage umgebenden Umgebung abgedichtet sind und ausgetauscht werden können, ohne die Atmosphäre innerhalb des Gehäuses zu beeinträchtigen. Die Anlage umfasst Atmosphärenkontrollmittel zum Steuern und Aufrechterhalten einer unbrennbaren Atmosphäre im Inneren des Gehäuses. Die Module sind in Gestellen angeordnet, und die Gestelle sind auf einem Hauptdeck angeordnet und durch Zugangsgänge getrennt.

Aus der US 2007/242134 A1 ist ein modulares, transportables und untertauchbares Videoanzeigesystem bekannt. Das System beinhaltet einen Betrachtungsmonitor, eine Kamera und ein mehradriges Verbindungskabel, das zur Unterwasserbeobachtung eingesetzt wird.

Die US 2007/242134 A1 schließlich betrifft die Speicherung verflüssigter Gase, beispielsweise Erdgase, wie Flüssigpropan oder flüssiges Butangas.

Die Dokumente GB1027678A, EP1717141A2, US2013/002065A1, DE4029443 A1, GB685675A und KR20140139145A sind ebenfalls Teil des Stands der Technik.

Für elektrische Geräte, wie z.B. einen Elektromotor, einen Schalter, eine Leuchte oder dergleichen gibt es Festlegungen zu Gefährdungsbereichen. Darunter können z.B. feuergefährdete Bereiche und explosionsgefährdete Bereiche der Zone 1 und 2 fallen. Abhängig vom zu erreichenden Schutz sind die Geräte entsprechend einer Schutzart oder Norm auszuführen.

Da Wasserfahrzeuge autark eingesetzt werden, ist eine hohe Ausfallsicherheit notwendig. Auch ist es vorteilhaft eine einfache und kostengünstige Bauweise von Wasserfahrzeugen zu realisieren.

Eine Aufgabe der Erfindung ist es daher die Sicherheit bei Wasserfahrzeugen zu erhöhen, bzw. deren Aufbau zu vereinfachen.

Eine Lösung der Aufgabe gelingt bei einem Wasserfahrzeug nach Anspruch 1 bzw. bei einem Verfahren nach Anspruch 7. Weitere Ausgestaltungen ergeben sich nach den Ansprüchen 2 bis 6 und 7 bis 11.

Ein Wasserfahrzeug weist eine elektrische Anlage auf, wobei die elektrische Anlage in einem Raum ist, wobei der Raum eine Atmosphäre aufweist, welche von Luft unterschiedlich ist.

Die elektrische Anlage weist zumindest einen Stromrichter, einen Motor und ein Stromverteilungsnetz. Beispiele für zusätzliche elektrische Geräte sind elektrische Motoren, elektrische Generatoren, Stromrichter, Schalter, Schaltanlagen, Schütze, etc. Derartige Geräte werden beispielsweise auch in einem Energiesystem für das Wasserfahrzeug verwendet. Elektrische Geräte wie ein Stromrichter, ein elektrischer Motor und ein Stromverteilungsnetz sind für einen elektrischen Antrieb des Fahrzeuges notwendig. Die Energie für das Wasserfahrzeug kommt beispielsweise aus einer Batterie, einer Brennstoffzelle, aus der Verbrennung eines kohlenwasserstoffhaltigen Mediums wie Erdgas, oder Erdöl, etc. Bei Wasserfahrzeugen (Unterund Überwasser) sind in vielen Fällen (besonders) elektrische Komponenten, also insbesondere elektrische Geräte, mit gewissen Schutzklassen ausgeführt, damit sie zum einen gegen ungewollte Berührung einer Mannschaft und zum anderen im Falle eines Fehlers gegenseitig und untereinander geschützt sind. Befinden sich die elektrischen Komponenten und Geräte einer elektrischen Anlage in einem Raum mit einer Atmosphäre, die von Luft unterschiedlich ist, kann der Schutz einzelner Komponenten reduziert werden. So kann beispielsweise das Gehäuse einzelner elektrischer Komponenten einfacher mit einer reduzierten Klassifizierung ausgeführt werden. Befindet sich eine Komponente in dem Raum mit der Atmosphäre, die von Luft unterschiedlich ist, kann beispielsweise auf eine separate Kapselung der jeweiligen Einzelkomponente verzichtet werden. Gegebenenfalls ist keine Kapselung mehr notwendig, oder nur noch eine Teilkapselung. Auch die Schutzklasse kann so reduziert werden. Dies kann auch zu einem reduzierten Einbauvolumen der elektrischen Anlage führen. Bisher sind Komponenten einzeln (teil-)gekapselt und mit ausreichenden Schutzklassen versehen, damit z.B. im Falle einer Lichtbogenbildung, kein Schaden an anderen Bauteilen oder Personen entstehen kann.

Um die Sicherheit zu erhöhen können gefährdende elektrische Anlagen von einem Mannschaftsraum räumlich getrennt sein.

Durch die Positionierung elektrischer Komponenten, wie elektrischer Geräte, in einem Raum mit einer speziellen Atmosphäre können einzelne (elektrische) Komponenten einfacher und weniger gekapselt ausgeführt werden, da die Gefahr von z.B. Bränden sehr viel geringer ist bzw. ausgeschlossen werden kann. Dies kann beispielsweise dann erreicht werden, wenn die Atmosphäre Inertgas ist, bzw. der Atmosphäre Sauerstoff O2 entzogen ist.

Durch den Raum, in welchem sich die Atmosphäre befindet, können so gleichzeitig mehrere Komponenten, bzw. gefährdete Bauteile geschützt werden. Feuermeldeanlagen und eine Evakuierung (Unterdruck) des gesamten Systems/Raums von Luft, welche Sauerstoff O2 aufweist, können auch eine erhöhte Sicherheit ermöglichen. Dies gelingt auch durch die Füllung des Raumes mit einer nicht-leitenden Flüssigkeit, wie z.B. Öl oder destilliertes Wasser.

In einer Ausgestaltung des Wasserfahrzeuges ist der Raum durch einen Druckkörper ausgebildet. Der Druckkörper ist ein Hohlkörper, bei dem während des Betriebs eine Differenz zwischen Innendruck und Außendruck auftritt. Unterwasserfahrzeuge weisen Druckkörper auf. So kann beispielsweise auch das gesamte Unterwasserfahrzeug mit der Atmosphäre gefüllt sein.

Erfindungsgemäß weist die Atmosphäre einen Treibstoff auf. Der Treibstoff ist beispielweise Erdgas. Alternativ zu einem Inertgas als Atmosphäre kann also auch ein gasförmiger Treibstoff die Atmosphäre ausbilden. Dabei kann zusätzlich durch ein weiteres Gas (z.B. Stickstoff aus einem mitgeführten Druckspeicher) verbrauchter Treibstoff ersetzt werden, damit keine explosive Atmosphäre entstehen kann. Ein weiteres Beispiel für ein Gas als Treibstoff ist Wasserstoffgas H2, welches beispielsweise in einer Brennstoffzelle verwendet werden kann.

In einer Ausgestaltung des Wasserfahrzeuges weist der Raum einen Überdruck auf. Durch den Überdruck kann beispielsweise die Tauchtiefe eines Unterwasserfahrzeuges erhöht werden. Es kann beispielsweise bei der Auslegung des Fahrzeuges darauf geachtet werden, dass der innere Druck immer höher ist als der äußere Druck. So kann die Auslegung analog zu Druckflaschen ausgeführt werden (P innen >> P außen).

In einer Ausgestaltung des Wasserfahrzeuges ist dieses überwiegend oder in seiner Gesamtheit mit der Atmosphäre geflutet. Weist also das Innere des Wasserfahrzeuges beispielsweise nur Stickstoff auf, so ist beispielsweise eine Explosionsgefahr durch Luftsauerstoff nicht mehr gegeben. Diese Vorgehensweise eignet sich insbesondere während des Einsatzes unbemannte Fahrzeuge.

In einer Ausgestaltung des Wasserfahrzeuges ist das Wasserfahrzeug ein Unterseeboot, welches insbesondere unbemannt ist. Das unbemannte Wasserfahrzeug (UUV) kann beispielsweise bei der Reparatur von Ventilen bei Erdölquellen, bei der Reparatur von Pipelines oder bei der Räumung von Minen eingesetzt werden.

Eine Lösung der Aufgabe gelingt auch bei einem Verfahren zum Betrieb eines Wasserfahrzeuges, wobei ein Raum mit einer elektrischen Anlage mit einer Atmosphäre gefüllt wird.

Die Atmosphäre wird als Kraftstoff verwendet, wobei die elektrische Anlage einen Stromrichter, einen elektrischen Motor und ein Stromverteilungsnetz aufweist, wobei mit dem Stromrichter, dem elektrischen Motor und dem Stromverteilungsnetz das Wasserfahrzeug elektrisch angetrieben wird.

Bei dem Verfahren wird insbesondere eines der beschriebenen Wasserfahrzeuge verwendet. Dabei wird insbesondere in dem Raum bzw. in dem Wasserfahrzeug ein Druck größer dem Luftdruck erzeugt.

Erfindungsgemäß wird in dem Verfahren als Atmosphäre ganz oder teilweise ein gasförmiger Kraftstoff wie Erdgas oder Wasserstoff verwendet.

Nach einer weiteren Ausgestaltung des Verfahrens wird der Raum und/oder das Wasserfahrzeug vor der Befüllung mit der Atmosphäre von allen Menschen befreit. Hieraus ergibt sich insbesondere ein unbemanntes Wasserfahrzeug, wie beispielsweise ein UUV, welches ferngesteuert sein kann oder auch autonom ist.

In einer Ausgestaltung des Verfahrens wird der Druck in Abhängigkeit von einer Tauchtiefe eingestellt. Je höher der Druck der eingefüllten Atmosphäre ist, wobei der Raum vom Druckkörper gebildet ist, desto größer ist die maximale Tauchtiefe.

In einer Ausgestaltung des Verfahrens wird der Druck in Abhängigkeit von einer Tauchdauer eingestellt. Je höher der Druck ist, desto mehr Treibstoff kann im Wasserfahrzeug mitgeführt werden, was dessen Reichweite erhöht. Durch einen höheren Druck der Atmosphäre kann auch eine größere Tauchtiefe erreicht werden.

Nachfolgend wird die Erfindung anhand von Ausführungsbeispielen exemplarisch beschrieben. Hierbei zeigt:
- FIG 1: ein unbemanntes Unterwasserfahrzeug, und
- FIG 2: ein Schiff als ein Wasserfahrzeug.

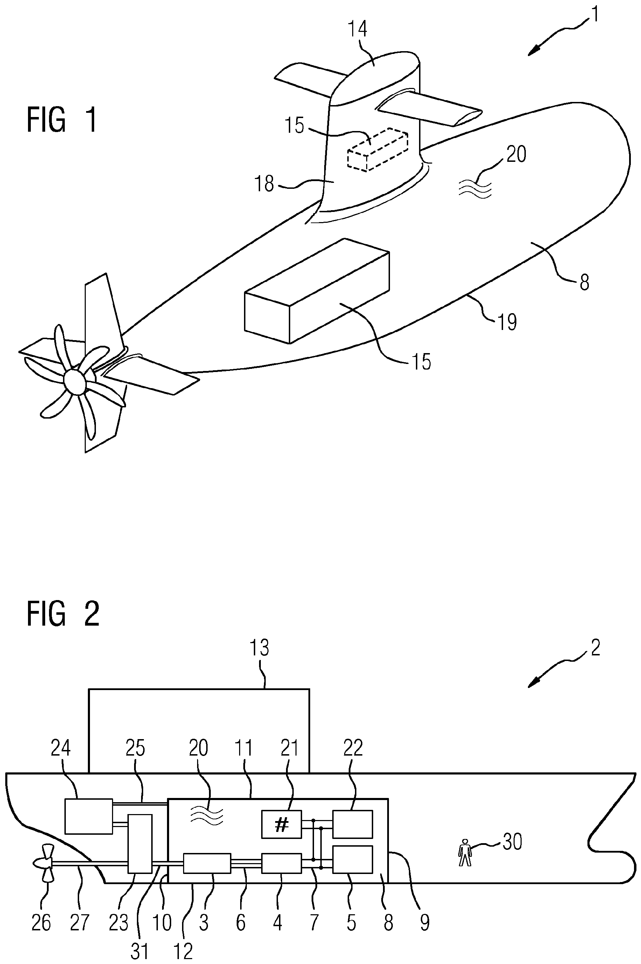

Die Darstellung nach FIG 1 zeigt ein Unterseeboot 1 als Beispiel für ein Wasserfahrzeug. Das Unterseeboot weist eine technische Anlage 15 auf. Die technische Anlage 15 weist als Komponenten zumindest einen elektrischen Motor, einen Stromrichter und ein Stromverteilungsnetz und wahlweise eine Batterie und/oder eine Brennstoffzelle auf, wobei diese Elemente in FIG 1 nicht dargestellt sind. Die elektrische Anlage 15 befindet sich in einem Raum 8. Die elektrische Anlage 15 kann sich ganz oder teilweise auch in einem Raum 18 eines Turmes 14 des Unterseebootes 1 befinden. Der Raum 8 bzw. 18 weist eine Atmosphäre 20 auf, welche von Luft unterschiedlich ist und mit drei Schlangenlinien symbolisiert ist. Der Raum 8 wird durch einen Druckkörper 19 gebildet. Der Druckkörper 19 trennt den Innenraum 8 des Unterwasserfahrzeugs 1 von den umgebenden Wassermassen.

Die Darstellung nach FIG 2 zeigt ein Schiff 2 als Beispiel für ein Wasserfahrzeug. Das Schiff 2 weist Aufbauten 13 auf. Der Antrieb des Schiffes 2 kann über einen Propeller 26 erfolgen, welcher über eine Welle 27 mit einem Getriebe 23 verbunden ist. An dem Getriebe 23 ist eine Verbrennungskraftmaschine 24 angeschlossen, welche über eine Kraftstoffrohr 25 mit Kraftstoff versorgt wird. Das Getriebe 23 ist auch mit einer elektrischen Maschine 3 über eine Welle 31 verbunden. Unabhängig von der Art des Antriebs mit oder ohne Propeller bzw. mit oder ohne Getriebe bzw. mit oder Verbrennungskraftmaschine 24, wie z.B. einem Dieselmotor, weist das Schiff einen Raum 8 auf. Der Raum 8 wird begrenzt von Seitenwänden 9 und 10, einer Decke 11 und einem Boden 12. Der Raum 8 ist durch einen Menschen 30 begehbar. Befindet sich in dem Raum 8 eine Atmosphäre 20, wie z.B. überwiegend Stickstoff als reaktionsarmes Gas mit wenig oder keinen Sauerstoffanteilen, so ist der Raum 8 von allen Menschen 30 befreit. In dem Raum 8 befindet sich z.B. zumindest ein Teil des Antriebsstrangs des Schiffes 2. Der Antriebsstrang weist den elektrischen Motor 3 auf. Der elektrische Motor 3 kann beispielsweise auch generatorisch betrieben werden. Der elektrische Motor 3 wird über eine dreiphasige elektrische Verbindung 6 von einem Stromrichter 4 gespeist. Der Stromrichter 4 bekommt seine elektrische Energie beispielsweise über einen zweiphasigen DC-Bus 7. An diesem zweiphasigen DC-Bus 7 ist eine Batterie 5, eine Brennstoffzelle 22 und ein Verteilungsnetz 21 angeschlossen. Das Verteilungsnetz 21, die Brennstoffzelle 22, die Batterie 5, der DC-Bus 7, der Stromrichter 4 und/oder der Motor 3 sind einzeln und/oder in Kombination eine technische Anlage. Diese technische Anlage befindet sich in der Atmosphäre 20, welche kaum oder keinen Sauerstoff O2 aufweist. Erfindungsgemäß weist die Atmosphäre ein Kraftstoff wie Erdgas oder Wasserstoff. Erdgas kann als Treibstoff über das Kraftstoffrohr 25 zur Verbrennungskraftmaschine 25 geführt werden. Wasserstoff H2 kann alternativ als Reaktionsgas in der Brennstoffzelle 22 als alternativer Energiespeicher verwendet werden.

## Patentansprüche

1. Wasserfahrzeug (1,2), welches eine elektrische Anlage (3,4,5,15) aufweist, wobei die elektrische Anlage (3,4,5,6,7,15,21,22) in einem Raum (8,18) ist, wobei der Raum (8,18) eine Atmosphäre (20) aufweist, welche von Luft unterschiedlich ist, wobei die Atmosphäre (20) einen Treibstoff aufweist, wobei die elektrische Anlage (3,4,5,6,7,15,21,22) einen Stromrichter (4), einen elektrischen Motor (3) und ein Stromverteilungsnetz (21) aufweist, wobei der Stromrichter (4), der elektrische Motor (3) und das Stromverteilungsnetz (21) für einen elektrischen Antrieb des Fahrzeuges notwendig sind.

2. Wasserfahrzeug (1,2) nach Anspruch 1, wobei der Raum (8,18) durch einen Druckkörper (19) ausgebildet ist.

3. Wasserfahrzeug (1,2) nach Anspruch 1 oder 2, wobei die Atmosphäre (20) ein reaktionsarmes Gas aufweist.

4. Wasserfahrzeug (1,2) nach einem der Ansprüche 1 bis 3, wobei der Raum (8,18) einen Überdruck aufweist.

5. Wasserfahrzeug (1,2) nach einem der Ansprüche 1 bis 4, wobei dieses überwiegend mit der Atmosphäre (20) geflutet ist.

6. Wasserfahrzeug (1,2) nach einem der Ansprüche 1 bis 5, wobei das Wasserfahrzeug (1,2) ein Unterseeboot (1) ist, welches insbesondere unbemannt ist.

7. Verfahren zum Betrieb eines Wasserfahrzeuges (1,2), wobei ein Raum (8,18) mit einer elektrischen Anlage (3,4,5,6,7,15,21,22) mit einer Atmosphäre (20) gefüllt wird, wobei die Atmosphäre (20) als Kraftstoff verwendet wird, wobei die elektrische Anlage (3,4,5,6,7,15,21,22) einen Stromrichter (4), einen elektrischen Motor (3) und ein Stromverteilungsnetz (21) aufweist, wobei mit dem Stromrichter (4), dem elektrischen Motor (3) und dem Stromverteilungsnetz (21) das Wasserfahrzeug elektrisch angetrieben wird.

8. Verfahren nach Anspruch 7, wobei als Wasserfahrzeug (1,2) ein Wasserfahrzeug (1,2) nach einem der Ansprüche 1 bis 6 verwendet wird.

9. Verfahren nach Anspruch 7 oder 8, wobei in dem Raum (8,18) ein Druck größer dem Luftdruck erzeugt wird.

10. Verfahren nach einem der Ansprüche 7 bis 9, wobei der Raum (8,18) vor der Befüllung mit der Atmosphäre (20) von allen Menschen (30) befreit wird.

11. Verfahren nach einem der Ansprüche 9 bis 10, wobei der Druck eine Abhängigkeit von einer Tauchtiefe aufweist.

## Claims

1. Watercraft (1, 2) which has an electrical system (3, 4, 5, 15), wherein the electrical system (3, 4, 5, 6, 7, 15, 21, 22) is in a space (8, 18), wherein the space (8, 18) has an atmosphere (20) which is different from air, wherein the atmosphere (20) has a power fuel, wherein the electrical system (3, 4, 5, 6, 7, 15, 21, 22) has a current converter (4), an electrical motor (3) and a power distribution network (21), wherein the current converter (4), the electrical motor (3) and the power distribution network (21) are required to electrically drive the vehicle.

2. Watercraft (1, 2) according to claim 1, wherein the space (8, 18) is formed by a reaction valve (19).

3. Watercraft (1, 2) according to claim 1 or 2, wherein the atmosphere (20) has a low-reaction gas.

4. Watercraft (1, 2) according to one of claims 1 to 3, wherein the space (8, 18) has an overpressure.

5. Watercraft (1, 2) according to one of claims 1 to 4, wherein this is flushed predominantly with the atmosphere (20) .

6. Watercraft (1, 2) according to one of claims 1 to 5, wherein the watercraft (1, 2) is a submarine (1), which is in particular unmanned.

7. Method for operating a watercraft (1, 2), wherein a space (8, 18) with an electrical system (3, 4, 5, 6, 7, 15, 21, 22) is filled with an atmosphere (20), wherein the atmosphere (20) is used as a power fuel, wherein the electrical system (3, 4, 5, 6, 7, 15, 21, 22) has a current converter (4), an electrical motor (3) and a power distribution network (21), wherein the current converter (4), the electrical motor (3) and the power distribution network (21) are required to electrically drive the vehicle.

8. Method according to claim 7, wherein a watercraft (1, 2) according to one of claims 1 to 6 is used as a watercraft (1, 2) .

9. Method according to claim 7 or 8, wherein a pressure greater than the air pressure is produced in the space (8, 18) .

10. Method according to one of claims 7 to 9, wherein the space (8, 18) is cleared of all people (30) before being filled with the atmosphere (20).

11. Method according to one of claims 9 to 10, wherein the pressure has a dependency on an immersion depth.

## Revendications

1. Bâtiment (1, 2) de navigation dans l'eau, qui a une installation (3, 4, 5, 15) électrique, dans lequel l'installation (3, 4, 5, 6, 7, 15, 21, 22) électrique est dans un espace (8, 18), dans lequel l'espace (8, 18) a une atmosphère (20), qui est différente de l'air, dans lequel l'atmosphère (20) a un carburant, dans lequel l'installation (3, 4, 5, 6, 7, 15, 21, 22) électrique a un onduleur (4), un moteur (3) électrique et un réseau (21) de distribution de courant, dans lequel l'onduleur (4), le moteur (3) électrique et le réseau (21) de distribution de courant sont nécessaires pour une propulsion électrique du bâtiment de navigation.

2. Bâtiment (1, 2) de navigation dans l'eau suivant la revendication 1, dans lequel l'espace (8, 18) est constitué d'un corps (19) sous pression.

3. Bâtiment (1, 2) de navigation dans l'eau suivant la revendication 1 ou 2, dans lequel l'atmosphère (20) a un gaz peu réactif.

4. Bâtiment (1, 2) de navigation dans l'eau suivant l'une des revendications 1 à 3, dans lequel l'espace (8, 18) est en surpression.

5. Bâtiment (1, 2) de navigation dans l'eau suivant l'une des revendications 1 à 4, dans lequel celui-ci est rempli principalement de l'atmosphère (20).

6. Bâtiment (1, 2) de navigation dans l'eau suivant l'une des revendications 1 à 5, dans lequel le bâtiment (1, 2) de navigation dans l'eau est un sous-marin, notamment sans équipage.

7. Procédé pour faire fonctionner un bâtiment (1, 2) de navigation dans l'eau, dans lequel on remplit d'une atmosphère (20) un espace (8, 18) ayant une installation (3, 4, 5, 6, 7, 15, 21, 22) électrique, dans lequel on utilise l'atmosphère (20) comme carburant, dans lequel l'installation (3, 4, 5, 6, 7, 15, 21, 22) électrique a un onduleur (4), un moteur (3) électrique et un réseau (21) de distribution de courant, dans lequel on propulse électriquement le bâtiment de navigation dans l'eau par l'onduleur (4), le moteur (3) électrique et le réseau (21) de distribution de courant.

8. Procédé suivant la revendication 7, dans lequel on utilise comme bâtiment (1, 2) de navigation dans l'eau, un bâtiment (1, 2) de navigation dans l'eau suivant l'une des revendications 1 à 6.

9. Procédé suivant la revendication 7 ou 8, dans lequel on produit dans l'espace (8, 18) une pression plus grande que la pression de l'air.

10. Procédé suivant l'une des revendications 7 à 9, dans lequel on dégage l'espace (8, 18) de toute présence humaine (30) avant de le remplir de l'atmosphère (20).

11. Procédé suivant l'une des revendications 9 à 10, dans lequel la pression a une dépendance à la profondeur de plongée.
